# FASCICULE DE BREVET EUROPEEN

(11) **EP 3 929 681 B1**
(45) Date de publication et mention de la délivrance du brevet: **08.05.2024**
(21) Numéro de dépôt: 20315326.7
(22) Date de dépôt: 26.06.2020
(51) Int. Cl.: G05B 19/418, G06T 17/00

(54) **PROCEDE ET SYSTEME DE MODELISATION D'UN ESPACE INDUSTRIEL EN REALITE AUGMENTEE**
VERFAHREN UND SYSTEM ZUR MODELLERSTELLUNG EINES INDUSTRIEAREALS IN ERWEITERTER REALITÄT
METHOD AND SYSTEM FOR AUGMENTED-REALITY MODELLING OF AN INDUSTRIAL SPACE

(43) Date de publication de la demande: 29.12.2021
(73) Titulaire: ATOS FRANCE, 95870 Bezons (FR)
(72) Inventeur: Chiron, Loïck, 63000 Clermont-Ferrand (FR); Doukhan, Bruce, 63460 Teilhède (FR); Royer, Jules, 63000 Clermont-Ferrand (FR); Sütyemez, Hasan, 24120 Terrasson-Lavilledieu (FR)
(74) Mandataire: Novagraaf Technologies

(56) Documents cités:
- WO-A1-2019/138003
- US-A1- 2001 025 229
- CHRISTIAN L. SCHUTZ ET AL: "Augmented reality using range images", PROCEEDINGS OF SPIE, vol. 3012, 15 mai 1997 (1997-05-15), page 472, XP055746708, US ISSN: 0277-786X, DOI: 10.1117/12.274489

## Description

### DOMAINE TECHNIQUE

La présente invention concerne le domaine de la modélisation numérique d'un espace industriel, par exemple, d'une ligne de production dans un bâtiment.

De manière connue, un bâtiment comporte une ligne de production pour fabriquer des produits. La ligne de production comporte de nombreuses machines dont l'encombrement et la masse sont très importants.

Lorsqu'une réorganisation de la ligne de production est souhaitée, il n'est pas envisageable d'arrêter la ligne de production pour tester différents positionnements des machines. Aussi, il est connu de modéliser de manière numérique une ligne de production afin de permettre de tester différents positionnements et organisations des machines. La modélisation numérique d'une ligne de production est généralement simple à mettre en oeuvre lorsqu'elle est composée de machines d'un même fabricant. En effet, le fabricant dispose d'une définition numérique (définition CAO) de chaque machine qu'il peut ainsi disposer à sa guise dans un environnement numérique.

La tâche se complique lorsque l'on ne dispose pas d'une définition numérique de chaque machine. La solution immédiate est de dessiner informatiquement chaque machine dont la définition numérique est manquante. Cela demeure chronophage et induit des coûts élevés. Pour réduire cet inconvénient, une solution serait de dessiner de manière grossière chaque machine, par exemple, sous la forme de pavés. Une telle solution n'est pas acceptable pour modéliser une ligne de production comportant de très nombreuses machines car il n'est pas possible pour l'utilisateur de distinguer immédiatement une machine d'une autre machine. La modélisation numérique n'apporte alors qu'une faible plus-value étant donné qu'elle est éloignée de la réalité et ne permet pas à un utilisateur d'appréhender intellectuellement les avantages ou les désavantages d'une nouvelle organisation de la ligne de production.

De plus, il est difficile pour un concepteur de la modélisation numérique de définir le niveau de précision souhaité par l'utilisateur pour modéliser chaque machine étant donné que le concepteur n'est pas familier avec la structure ou la fonction de chacune des machines. En effet, une machine peut être modulaire et comporter plusieurs éléments indépendants. Sans information précise, le concepteur peut dessiner une machine en un unique bloc alors qu'elle comporte plusieurs modules indépendants qui pourraient être déplacés les uns par rapport aux autres. Il est alors nécessaire que l'utilisateur définisse de manière précise la structure de chaque machine, ce qui augmente le temps de modélisation et augmente le coût de la modélisation numérique.

Par ailleurs, il est généralement souhaité de modéliser tout un espace de production, c'est-à-dire, aussi bien le bâtiment industriel que les machines et les équipements situés à l'intérieur. Outre la difficulté de dessiner informatiquement chaque machine et équipement, il est aussi nécessaire de dessiner le bâtiment industriel pour lequel il n'existe généralement aucune définition numérique.

Une solution pour éliminer ces divers inconvénients serait de scanner de manière tridimensionnelle l'espace de production afin d'obtenir un nuage de points représentant l'espace de production. Cette solution n'est pas satisfaisante étant donné que le nuage de points ne distingue pas le bâtiment, des machines et des équipements. Une telle représentation est considérée inutile pour réorganiser une ligne de production étant donné que les machines et les équipements ne peuvent pas être déplacés de manière indépendante dans ledit bâtiment.

L'invention vise ainsi à éliminer au moins certains de ces inconvénients en proposant un nouveau procédé de modélisation numérique d'un espace industriel.

On connaît dans l'art antérieur, par les documents US2001/025229A1, « Augmented reality using range images » (Christian L . SCHUTZ, ISSN : 0277-786X) et WO 2019-138003, plusieurs méthodes pour modéliser numériquement un espace industriel au moyen d'algorithmes de traitement d'images.

### PRESENTATION DE L'INVENTION

L'invention concerne un procédé de modélisation numérique d'un espace industriel, l'espace industriel comprenant une pluralité d'équipements disposés dans un bâtiment industriel, le procédé de modélisation comprenant :
- une étape de numérisation tridimensionnelle de l'espace industriel de manière à obtenir une nappe comportant une pluralité de points définissant des mailles représentant l'enveloppe externe de l'espace industriel avec l'ensemble de ses équipements,
- une étape de segmentation en temps réel de la nappe dans un environnement virtuel par un utilisateur au cours de laquelle :
   - une forme englobante est positionnée par l'utilisateur dans l'environnement virtuel pour englober au moins un équipement à segmenter
   - les points de la nappe, appartenant au volume de la forme englobante, sont associés de manière à former un objet virtuel.

Grâce à l'invention, un utilisateur final peut par lui-même segmenter une nappe unitaire afin de définir des objets virtuels qui sont représentatifs. Une telle étape de segmentation permet avantageusement de ne pas redessiner individuellement chaque équipement en détails. En outre, comme l'utilisateur définit la forme englobante et sa position, il peut paramétrer la segmentation selon ses choix de manière pratique. Une segmentation dans l'environnement virtuel est la plus pratique pour l'utilisateur qui peut déterminer de manière pertinente la délimitation de chaque équipement.

De préférence, le procédé comporte une étape d'extraction des points appartenant à l'objet virtuel de la nappe dans une base de données.

De manière préférée, le procédé comporte une étape de sélection d'une pluralité d'objets virtuels de la base de données dans un environnement virtuel de manière à modéliser une nouvelle organisation des équipements de l'espace industriel. La base de données forme ainsi un inventaire des équipements qui sont propres à l'espace industriel. Ils peuvent positionner et dupliquer au gré de l'utilisateur pour définir une nouvelle organisation de l'espace industriel.

Selon un aspect de l'invention, la forme englobante se présente sous une forme convexe définissant un volume fermé. De préférence, la forme englobante se présente sous la forme d'un cylindre. Un cylindre, de contour rectangulaire, circulaire ou autre, est simple à définir et à positionner pour un utilisateur dans un environnement virtuel.

De préférence, la forme englobante étant définie par un contour fermé et une directrice, l'utilisateur dessine dans l'environnement virtuel le contour fermé. De manière avantageuse, l'utilisateur peut dessiner de manière précise un contour fermé au sol entourant l'équipement qu'il souhaite extraire de la nappe. Une telle mise en oeuvre est rapide et pratique.

De manière préférée, le procédé comporte une étape de calcul de produits scalaires entre au moins un point à tester de la nappe et des points de la forme englobante afin de déterminer si le point à tester appartient à la forme englobante. Une étape de calcul de produits scalaires permet de tester les points de la nappe de manière locale dans le référentiel local de l'utilisateur positionné dans l'environnement virtuel.

De préférence, l'étape de numérisation tridimensionnelle de l'espace industriel est réalisée par photogrammétrie ou par lasergrammétrie.

De préférence, la nappe comportant au moins une maille limitrophe comportant au moins un point objet appartenant à l'objet virtuel et au moins un point non objet n'appartenant pas à l'objet, le procédé comporte une étape de division de la maille limitrophe en une pluralité de sous-mailles dont au moins une appartient exclusivement à l'objet virtuel. Une telle étape de division permet d'extraire un objet virtuel avec un contour net qui dépend à la fois de la forme englobante et de la densité des points de la nappe. L'objet virtuel extrait possède un aspect amélioré.

De préférence, les sous-mailles sont définies à partir de points d'intersection de la maille limitrophe avec la forme englobante.

De préférence, l'étape de segmentation est mise en oeuvre par un utilisateur équipé au moins d'un casque de réalité virtuelle afin de pouvoir visualiser la nappe de l'espace industriel et d'au moins un organe de commande de manière à permettre de se déplacer dans l'environnement virtuel et positionner la forme englobante.

L'invention concerne également un système de modélisation numérique d'un espace industriel, l'espace industriel comprenant une pluralité d'équipements disposés dans un bâtiment industriel, le système de modélisation comprenant :
- un système de numérisation tridimensionnelle de l'espace industriel de manière à obtenir une nappe comportant une pluralité de points définissant des mailles représentant l'enveloppe externe de l'espace industriel avec l'ensemble de ses équipements,
- un système de segmentation en temps réel de la nappe dans un environnement virtuel par un utilisateur, le système de segmentation étant configuré pour :
- permettre à l'utilisateur de positionner une forme englobante dans l'environnement virtuel pour englober au moins un équipement à segmenter
- associer les points de la nappe, appartenant au volume de la forme englobante, de manière à former un objet virtuel.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'un bâtiment comprenant un espace industriel comportant une pluralité d'équipements disposés au sol.
La figure 2 est une représentation schématique d'une nappe de points définissant l'espace industriel.
La figure 3 est une représentation schématique d'un utilisateur dans un environnement virtuel dans lequel est affiché la nappe de points comportant un équipement.
La figure 4 est une représentation schématique d'une première forme de réalisation d'une forme englobante pour l'équipement de la figure 3.
La figure 5 est une représentation schématique d'une deuxième forme de réalisation d'une forme englobante pour l'équipement de la figure 3.
La figure 6 est une représentation schématique d'une détermination d'un objet virtuel à partir de la forme englobante pour l'équipement de la figure 3.
La figure 7 est une représentation schématique d'une étape de détermination si un point de la nappe appartient à la forme englobante.
La figure 8 est une représentation de la nappe schématique suite à l'extraction de l'objet virtuel.
La figure 9 est une représentation de la nappe suite à une étape de remaillage.
La figure 10 est une représentation schématique rapprochée d'une maille limitrophe de la nappe pour une forme englobante prédéterminée.
La figure 11 est une représentation schématique rapprochée d'une division de la maille limitrophe de la figure 10 en une pluralité de sous-mailles.
La figure 12 est une représentation schématique rapprochée de deux segmentations différentes d'un ensemble de deux équipements appartenant à la nappe.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

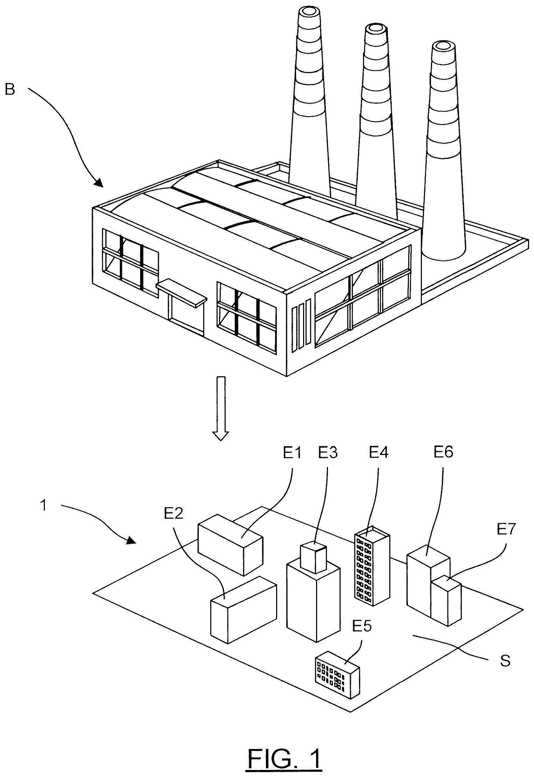

En référence à la figure 1, l'invention concerne un procédé de modélisation numérique par ordinateur d'un espace industriel 1 d'un bâtiment B, en particulier, d'une ligne de production.

L'espace industriel 1 comprend une pluralité d'équipements E1-E7 disposés dans un bâtiment industriel B. Comme illustré à la figure 1, il est représenté de manière schématique 7 équipements E1-E7 qui sont positionnés au sol S dans le bâtiment industriel B.

Dans cet exemple, certains équipements E1-E5 sont positionnés de manière indépendante tandis que d'autres sont accolés (équipements E6-E7). Dans cet exemple, par souci de clarté et de concision, les équipements E1-E7 sont représentés sous la forme de pavés mais il ceux-ci possèdent en pratique des formes différentes et complexes, ce qui rend leur modélisation numérique avec un logiciel de CAO chronophage et coûteuse.

Selon l'invention, le procédé de modélisation comprend une étape de numérisation tridimensionnelle de l'espace industriel 1 de manière à obtenir une nappe NAP comportant une pluralité de points définissant des mailles représentant l'enveloppe externe de l'espace industriel 1 avec l'ensemble de ses équipements E1-E7.

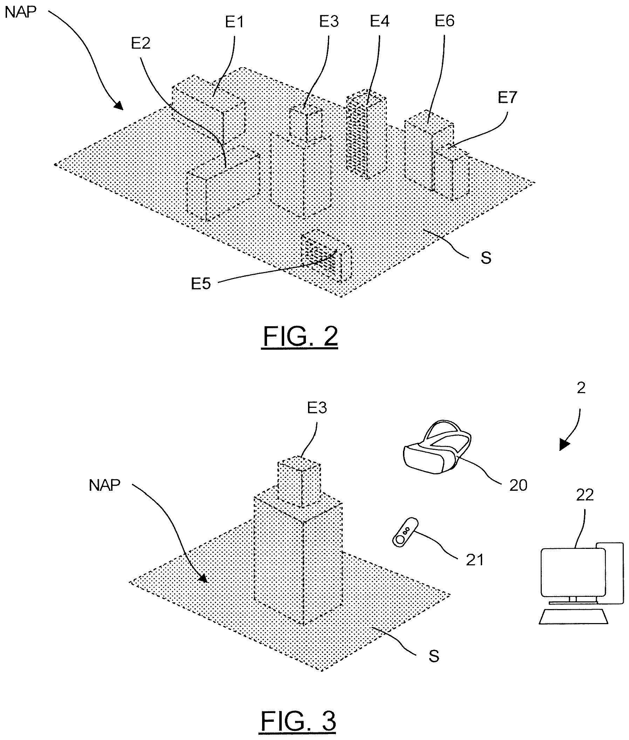

Une étape de numérisation tridimensionnelle par un système de numérisation tridimensionnelle est connue de l'homme du métier. Elle peut être mise en oeuvre notamment par un procédé de photogrammétrie ou lasergrammétrie (télédétection par laser), connue de l'homme du métier sous sa désignation Lidar. Grâce à cette étape, on obtient une nappe NAP représentant l'espace industriel 1 avec l'ensemble de ses équipements E1-E7. Comme illustré à la figure 2, les équipements E1-E7 sont représentés par un nuage de points maillés. Une telle nappe NAP ne permet pas de distinguer les équipements E1-E7 entre eux ou les équipements E1-E7 avec le sol S.

La nappe NAP comprend des points qui sont reliés de manière à former des mailles triangulaires.

L'invention est remarquable en ce qu'elle comporte une étape de segmentation en temps réel de la nappe NAP dans un environnement virtuel par un utilisateur, en particulier, par l'utilisateur final qui souhaite modéliser l'espace industriel à partir d'objets virtuels.

Il est peu pertinent de confier la segmentation d'un espace industriel 1 à un intervenant extérieur qui ne connait pas la nature et la fonction des équipements E1-E7, ce qui allonge la durée et augmente le coût de la modélisation numérique. La présente invention se propose de donner la possibilité à l'utilisateur final de segmenter par lui-même la nappe NAP afin d'obtenir la granularité désirée pour modéliser numériquement l'espace industriel 1. Comme cela sera présenté par la suite, il peut choisir de définir un objet virtuel correspondant à un unique équipement, à une pluralité d'équipements associés ensemble ou uniquement à une partie d'un équipement. La liberté offerte est totale et l'utilisateur final ne requiert pas d'assistance extérieure.

Cette étape de segmentation est mise en oeuvre dans un environnement virtuel au moyen d'un système de segmentation 2 (Figure 3) qui comprend un casque de réalité virtuelle 20 et un organe de commande 21 reliés à un calculateur 22 dans lequel est stocké la nappe NAP de l'espace industriel 1.

Toujours en référence à la figure 3, l'utilisateur (non représenté) est équipé du casque de réalité virtuelle 20 afin de pouvoir visualiser la nappe NAP de l'espace industriel 1 et de l'organe de commande 21 de manière à permettre de se déplacer dans l'environnement virtuel selon différentes positions, différents angles et différents grossissements par rapport à ladite nappe NAP. L'organe de commande 21 permet en outre de réaliser la segmentation comme cela sera réalisé par la suite. La segmentation est réalisée en temps réel dans l'environnement virtuel.

Un exemple de segmentation de l'équipement E3 pour l'extraire de la nappe NAP va être présenté en référence aux figures 3 à 6.

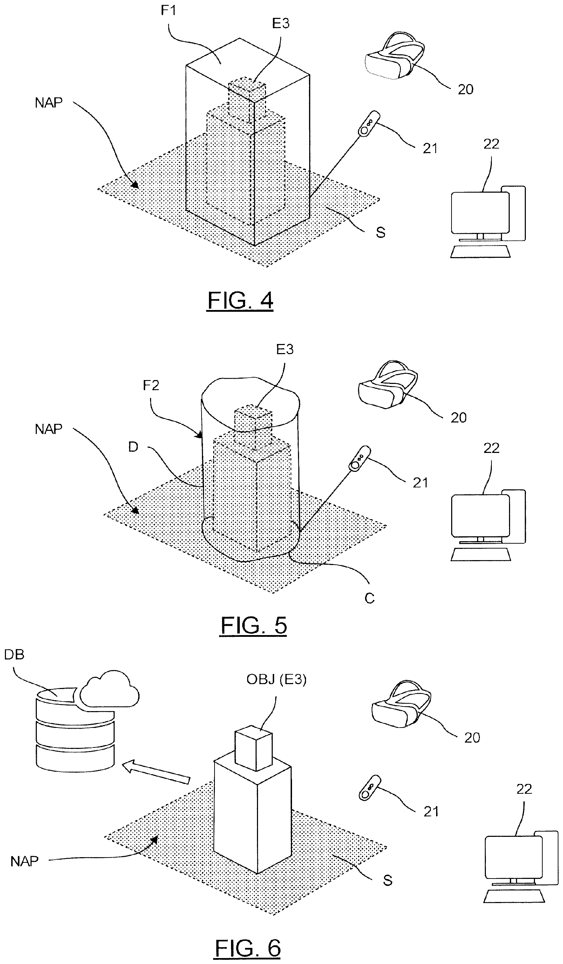

Au cours de l'étape de segmentation, en référence à la figure 4, une forme englobante F1 est positionnée par l'utilisateur dans l'environnement virtuel pour englober au moins un équipement à segmenter, dans cet exemple, l'équipement E3. Par forme englobante, on entend une forme convexe définissant un volume fermé.

La forme englobante F1 définit un volume à tester dans lequel se situe l'équipement à segmenter. De manière avantageuse, dans l'environnement virtuel, l'utilisateur peut positionner et dimensionner précisément la forme englobante F1 afin que celle-ci approxime le volume de l'équipement à segmenter. Une segmentation dans l'environnement virtuel est ainsi pertinente.

Comme illustré à la figure 4, la forme englobante F1 se présente sous la forme d'un pavé dont l'enveloppe est positionnée de manière à englober les points de la nappe NAP appartenant à l'équipement E3 que l'utilisateur souhaite segmenter.

L'utilisateur dispose avantageusement d'une interface utilisateur, accessible via son organe de commande 21 et son casque de réalité virtuelle 21, de manière à choisir la forme englobante la plus adaptée parmi un ensemble de formes englobantes (pavé, sphère, cube, ogive, capsule, etc.). De manière préférée, les formes englobantes pouvant être choisies sont diverses et adaptées au domaine technique de l'espace industriel 1 à modéliser. Par souci de clarté et de concision, une forme englobante sera référencée F de manière générale.

De manière avantageuse, l'utilisateur peut positionner, orienter et dimensionner la forme englobante F de manière précise dans l'environnement virtuel afin de segmenter de manière précise et réaliste les équipements dont il connait la structure et la fonction.

Dans une forme de réalisation préférée, en référence à la figure 5, la forme englobante F2 se présente sous la forme d'un cylindre comportant un contour fermé C et d'une directrice D. De manière préférée, l'utilisateur dessine dans l'environnement virtuel, à l'aide de son casque de réalité virtuelle 20 et de l'organe de commande 21, un contour fermé C au sol S qui épouse sensiblement la forme de l'équipement à segmenter. L'utilisateur définit ensuite une directrice D, généralement verticale, ainsi qu'une longueur de directrice D pour définir la forme englobante F2. Un tel contour fermé C est réalisé précisément et permet une segmentation pertinente.

Une fois la forme englobante F définie (pavé, cylindrique ou autre), les points de la nappe NAP, appartenant au volume de la forme englobante F, sont associés de manière à former un objet virtuel OBJ. L'objet virtuel OBJ peut alors être référencé dans une base de données DB comme illustré à la figure 6 de manière à pouvoir être positionné/dupliqué dans un autre environnement virtuel de test ou dans le même environnement virtuel. Dans cet exemple, l'utilisateur associe l'objet virtuel OBJ à au moins une métadonnée, par exemple, un nom « équipement E3 ». La base de données DB est de préférence stockée sur le calculateur 22. Grâce à la forme englobante F, on peut avantageusement obtenir un objet virtuel OBJ ayant une forme complexe et parfaitement représentative de l'équipement E3.

Plusieurs méthodes peuvent être mises en oeuvre pour déterminer les points de la nappe NAP qui appartiennent au volume de la forme englobante F. Une première méthode vise à comparer la position tridimensionnelle de chaque point P de la nappe NAP au volume de la forme englobante F. Une telle méthode est performante mais exige une puissance de calcul importante.

De manière préférée, la nappe NAP et la forme englobante F possèdent chacune une matrice de transformation. Cette matrice permet la conversion des mailles du repère local associé vers le repère global de l'environnement. Son objet est de pouvoir comparer les mailles de la nappe NAP et les mailles de la forme englobante F.

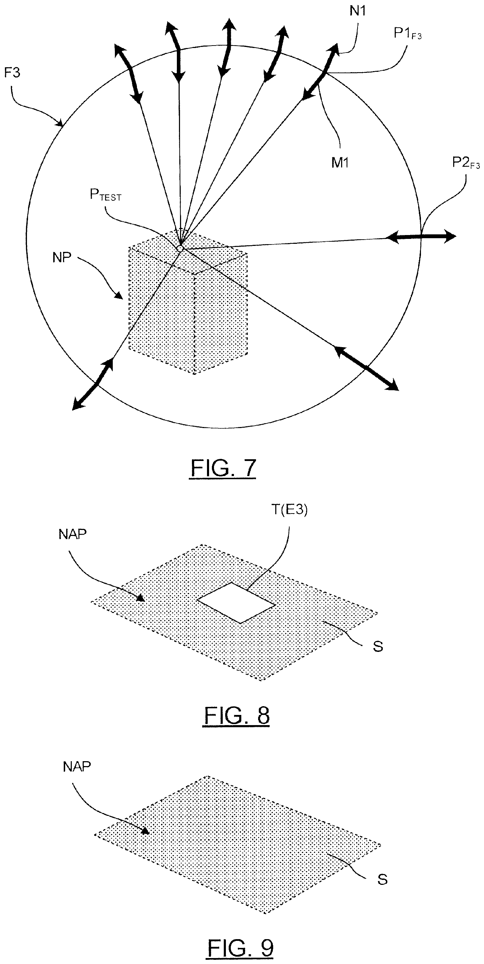

De manière alternative, il est proposé de tester des points du nuage de point dans un référentiel local, en particulier, celui dans lequel évolue l'utilisateur dans l'environnement virtuel. A cet effet, il est réalisé une étape de calcul de produits scalaires entre les points à tester P_{TEST} de la nappe NAP et des points P1_{F3}, P2_{F3} d'une forme englobante F3. Dans cet exemple, en référence à la figure 7, il est représenté une forme englobante F3 se présentant sous la forme d'une sphère mais il va de soi qu'elle pourrait être différente.

Pour vérifier si un point P_{TEST} de la nappe NAP appartient à la forme englobante F3, on définit un vecteur normal N1 à partir d'un premier point P1_{F3} de la forme englobante F3 et un vecteur de direction M1 partant dudit premier point P1_{F3} de la forme englobante F3 vers le point à tester P_{TEST} de la nappe NAP. Un produit scalaire est réalisé entre le vecteur normal N1 et le vecteur de direction M1 qui a été, de préférence, préalablement normalisé.

Si le produit scalaire est négatif, le point à tester P_{TEST} appartient à la forme englobante F3 et est associé à l'objet virtuel OBJ. A l'inverse, si le produit scalaire est nul ou positif, le point à tester P_{TEST} est exclu de l'objet virtuel. Cette méthode par calcul scalaire est plus rapide et ne nécessite pas de réaliser un changement de référentiel dont le coût calculatoire est élevé. La détermination d'un objet virtuel OBJ peut être réalisée de manière pratique et rapide en temps réel par un utilisateur évoluant localement dans un environnement virtuel.

De manière préférée, lors de l'étape de segmentation, les points appartenant à l'objet virtuel OBJ sont extraits de la nappe NAP de manière à définir une nouvelle nappe épurée. En pratique, l'utilisateur peut ainsi extraire tous les équipements afin d'obtenir une nappe NAP représentant le bâtiment industriel B, en particulier, son sol S.

Comme illustré à la figure 8, après extraction de l'objet virtuel OBJ correspondant à l'équipement E3, la nappe NAP comporte un trou T. Afin de former une nappe continue NAP, il est réalisé de préférence un nouveau maillage à partir des points non extraits comme illustré à la figure 9.

De manière à permettre une extraction précise et propre de l'objet virtuel OBJ, il est procédé à une étape de division des mailles limitrophes de l'objet virtuel OBJ.

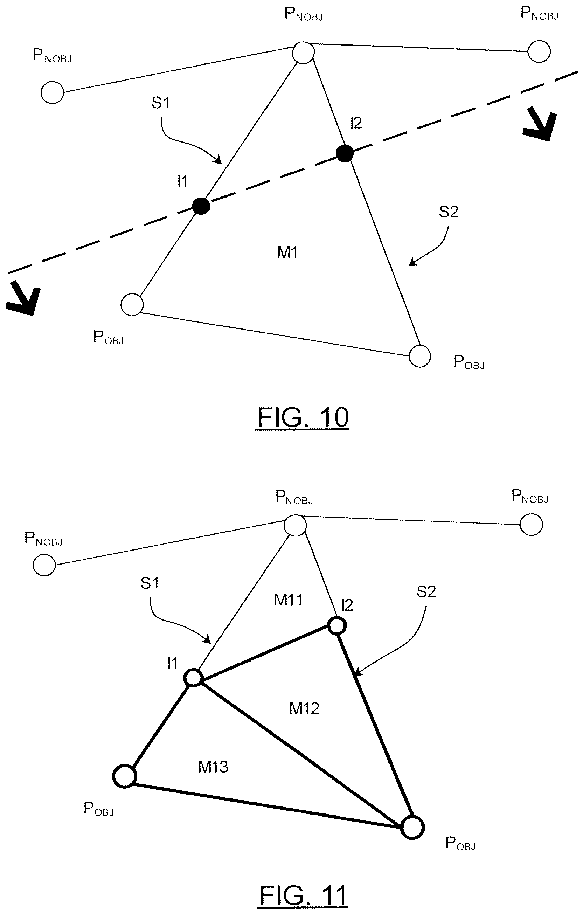

En référence à la figure 10, lors de l'extraction des points de l'objet virtuel OBJ, certaines mailles M1, appelées mailles limitrophes M1, comportent au moins un point objet P_{OBJ} (un sommet) appartenant à l'objet virtuel OBJ et au moins un point non objet (sommet) P_{NOBJ} n'appartenant pas à l'objet OBJ. Chaque maille limitrophe M1 comporte ainsi au moins un segment de liaison S1, S2 reliant un point objet P_{OBJ} et un point non-objet P_{NOBJ}. Comme illustré à la figure 10, la forme englobante F coupe la maille limitrophe M1 en deux et traverse deux segments S1, S2 selon deux points d'intersection I1, I2.

En référence à la figure 11, le procédé comporte une étape de division de la maille limitrophe M1 en une pluralité de sous-mailles M11, M12, M13 dont au moins une appartient exclusivement à la forme englobante F. Dans cet exemple, il est formé deux sous-mailles M12, M13 appartenant exclusivement à la forme englobante.

Dans cette forme de réalisation, les points d'intersection I1, I2 sont définis comme des points de la nappe NAP et utilisés pour remailler, en temps réel, la maille limitrophe L1 afin de définir une pluralité de nouvelles mailles triangulaires M11, M12, M13. Comme illustré à la figure 11, les mailles M12, M13 appartiennent à la forme englobante et sont intégrées à l'objet virtuel OBJ, ce qui améliorera la précision et la netteté dudit objet virtuel OBJ qui peut être ainsi mieux appréhendé par l'utilisateur.

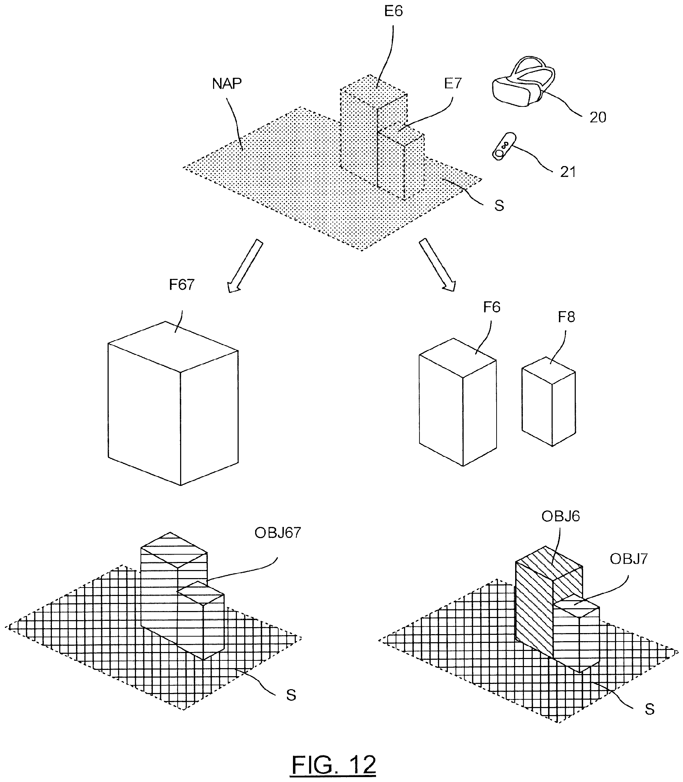

Grâce à l'invention, l'utilisateur peut extraire de la nappe NAP des objets virtuels OBJ avec la granularité qu'il désire en choisissant la forme englobante F la plus adaptée. A titre d'exemple, en référence à la figure 12 représentant la nappe NAP intégrant deux équipements E6-E7 qui sont accolés. L'utilisateur peut définir une unique forme englobante F67 pour définir un unique objet virtuel OBJ67 ou deux formes englobantes F6, F7 pour définir deux objets virtuels OBJ6, OBJ7 qui sont distincts. De manière avantageuse, un utilisateur peut former un objet virtuel comportant plusieurs équipements indépendants qui sont toujours associés ensemble, ce qui procure un gain de temps important.

Grâce à l'invention, la base de données DB forme une librairie pour l'utilisateur dans lequel sont répertoriés tous les objets virtuel OBJ qu'il souhaite réorganiser dans l'espace industriel 1. Chaque objet virtuel OBJ possède sa forme exacte sans pour autant avoir été redessiné par ordinateur, ce qui permet un gain de temps et améliore la perception des objets virtuels par comparaison à des objets qui auraient été dessinés de manière grossière.

De manière avantageuse, le système de segmentation 2 permet également à l'utilisateur de placer des objets virtuels OBJ selon la position de son choix afin de pouvoir imaginer l'espace industriel 2 répondant à ses contraintes et désirs. Un même objet virtuel OBJ peut être réutilisé plusieurs fois à partir de la librairie ainsi obtenue.

## Revendications

1. Procédé de modélisation numérique d'un espace industriel (1), l'espace industriel (1) comprenant une pluralité d'équipements (E1-E7) disposés dans un bâtiment industriel (B), le procédé de modélisation est **caractérisé par** :
- une étape de numérisation tridimensionnelle de l'espace industriel (1) de manière à obtenir une nappe (NAP) comportant une pluralité de points définissant des mailles représentant l'enveloppe externe de l'espace industriel (1) avec l'ensemble de ses équipements (E1-E7),
- une étape de segmentation en temps réel de la nappe (NAP) dans un environnement virtuel par un utilisateur au cours de laquelle :
- une forme englobante (F) est positionnée par l'utilisateur dans l'environnement virtuel pour englober au moins un équipement à segmenter (E1-E7)
- les points de la nappe (NAP), appartenant au volume de la forme englobante (F), sont associés de manière à former un objet virtuel (OBJ) correspondant à un unique équipement (E1-E7), à une pluralité d'équipements (E1-E7) associés ensemble ou uniquement à une partie d'un équipement (E1-E7).

2. Procédé selon la revendication 1 dans lequel le procédé comporte une étape d'extraction des points appartenant à l'objet virtuel (OBJ) de la nappe (NAP) dans une base de données (DB).

3. Procédé selon la revendication 2 dans lequel le procédé comporte une étape de sélection d'une pluralité d'objets virtuels (OBJ) de la base de données (DB) dans un environnement virtuel de manière à modéliser une nouvelle organisation des équipements (E1-E7) de l'espace industriel (1).

4. Procédé selon l'une des revendications 1 à 3 dans lequel la forme englobante (F) se présente sous une forme convexe définissant un volume fermé.

5. Procédé selon la revendication précédente dans lequel, la forme englobante (F) étant définie par un contour fermé (C) et une directrice (D), l'utilisateur dessine dans l'environnement virtuel le contour fermé (C).

6. Procédé selon l'une des revendications 1 à 5 comportant une étape de calcul de produits scalaires entre au moins un point à tester (P_{TEST}) de la nappe (NAP) et des points de la forme englobante (F) afin de déterminer si le point à tester (P_{TEST}) appartient à la forme englobante (F).

7. Procédé selon l'une des revendications 1 à 6 dans lequel l'étape de numérisation tridimensionnelle de l'espace industriel (1) est réalisée par photogrammétrie ou par lasergrammétrie.

8. Procédé selon l'une des revendications 2 à 7 dans lequel, la nappe (NAP) comportant au moins une maille limitrophe (M1) comportant au moins un point objet (P_{OBJ}) appartenant à l'objet virtuel (OBJ) et au moins un point non objet (P_{NOBJ}) n'appartenant pas à l'objet (OBJ), le procédé comporte une étape de division de la maille limitrophe (M1) en une pluralité de sous-mailles (M11, M12, M13) dont au moins une appartient exclusivement à l'objet virtuel (OBJ).

9. Procédé selon la revendication 8 dans lequel les sous-mailles (M 11, M12, M13) sont définies à partir de points d'intersection (I1, I2) de la maille limitrophe (M1) avec la forme englobante (F).

10. Procédé selon l'une des revendications 1 à 9 dans lequel l'étape de segmentation est mise en oeuvre par un utilisateur équipé au moins d'un casque de réalité virtuelle (20) afin de pouvoir visualiser la nappe (NAP) de l'espace industriel (1) et d'au moins un organe de commande (21) de manière à permettre de se déplacer dans l'environnement virtuel et positionner la forme englobante (F).

11. Système de modélisation numérique d'un espace industriel (1), l'espace industriel (1) comprenant une pluralité d'équipements (E1-E7) disposés dans un bâtiment industriel (B), le système de modélisation est **caractérisé par**:
- un système de numérisation tridimensionnelle de l'espace industriel (1) de manière à obtenir une nappe (NAP) comportant une pluralité de points définissant des mailles représentant l'enveloppe externe de l'espace industriel (1) avec l'ensemble de ses équipements (E1-E7),
- un système de segmentation (2) en temps réel de la nappe (NAP) dans un environnement virtuel par un utilisateur, le système de segmentation étant configuré pour :
- permettre à l'utilisateur de positionner une forme englobante (F) dans l'environnement virtuel pour englober au moins un équipement à segmenter (E1-E7)
- associer les points de la nappe (NAP), appartenant au volume de la forme englobante (F), de manière à former un objet virtuel (OBJ) correspondant à un unique équipement (E1-E7), à une pluralité d'équipements (E1-E7) associés ensemble ou uniquement à une partie d'un équipement (E1-E7).

## Patentansprüche

1. Verfahren zur numerischen Modellierung eines Industriegebiets (1), wobei das Industriegebiet (1) eine Vielzahl von Anlagen (E1-E7) umfasst, die in einem Industriegebäude (B) angeordnet sind, wobei das Verfahren zur Modellierung **gekennzeichnet ist durch**
- einen Schritt der dreidimensionalen Digitalisierung des Industriegebiets (1), sodass eine Bahn (NAP) erhalten wird, die eine Vielzahl von Punkten umfasst, die Maschen definieren, welche die äußere Hülle des Industriegebiets (1) mit der Gesamtheit der Anlagen (E1-E7) abbildet,
- einen Schritt der Segmentierung der Bahn (NAP) in Echtzeit in einer virtuellen Umgebung **durch** einen Benutzer, in der:
- eine umschließende Form (F) **durch** einen Benutzer in der virtuellen Umgebung positioniert wird, um mindestens eine zu segmentierende Anlage (E1-E7) zu umschließen
- die Punkte der Bahn (NAP), die zum Volumen der umschließenden Form (F) gehören, so verbunden sind, das ein virtuelles Objekt (OBJ) gebildet wird, das einer einzelnen Anlage (E1-E7), einer Vielzahl von Anlagen (E1-E7), die gemeinsam oder einzeln mit einem Teil einer Anlage (E1-E7) verbunden sind, entspricht.

2. Verfahren nach Anspruch 1, wobei das Verfahren einen Schritt der Extraktion der Punkte umfasst, die in einer Datenbank (DB) zum virtuellen Objekt (OBJ) der Bahn (NAP) gehören.

3. Verfahren nach Anspruch 2, wobei das Verfahren einen Schritt des Auswählens einer Vielzahl von virtuellen Objekten (OBJ) von der Datenbank (DB) in einer virtuellen Umgebung umfasst, sodass eine neue Organisation der Anlagen (E1-E7) des Industriegebiets (1) modelliert wird.

4. Verfahren nach einem der Ansprüche 1 bis 3, wobei die umschließende Form (F) in konvexer Form vorliegt, die ein geschlossenes Volumen definiert.

5. Verfahren nach dem vorstehenden Anspruch, wobei die umschließende Form (F) durch eine geschlossene Kontur (C) und eine Leitlinie (D) definiert wird, wobei der Benutzer in der virtuellen Umgebung die geschlossene Kontur (C) zeichnet.

6. Verfahren nach einem der Ansprüche 1 bis 5, umfassend einen Schritt des Berechnens des Skalarprodukts zwischen mindestens einem Testpunkt (P_{TEST}), der Bahn (NAP) und den Punkten der umschließenden Form (F), um zu bestimmen, ob der Testpunkt (P_{TEST}) der umschließenden Form (F) zugehörig ist.

7. Verfahren nach einem der Ansprüche 1 bis 6, wobei der Schritt der dreidimensionalen Digitalisierung des Industriegebiets (1) durch Photogrammetrie oder durch Lasergrammetrie durchgeführt wird.

8. Verfahren nach einem der Ansprüche 2 bis 7, wobei die Bahn (NAP) mindestens eine angrenzende Masche (M1) umfasst, die mindestens einen Objektpunkt (P_{OBJ}) umfasst, der zu dem virtuellen Objekt (OBJ) gehört, und mindestens einen Nicht-Objektpunkt (P_{NOBJ}), der nicht zu dem Objekt (OBJ) gehört, wobei das Verfahren einen Schritt des Teilens der angrenzenden Masche (M1) in eine Vielzahl von Untermaschen (M11, M12, M13) umfasst, von denen mindestens eine ausschließlich zu dem virtuellen Objekt (OBJ) gehört.

9. Verfahren nach Anspruch 8, wobei die Untermaschen (M11, M12, M13) ausgehend von den Schnittpunkten (I1, I2) der angrenzenden Masche (M1) mit der umschließenden Form (F) definiert werden.

10. Verfahren nach einem der Ansprüche 1 bis 9, wobei der Schritt der Segmentierung durch einen Benutzer durchgeführt wird, der mindestens mit einem Helm der virtuellen Realität (20), um die Bahn (NAP) des Industriegebiets (1) visualisieren zu können, und mindestens einem Steuergerät (21) ausgestattet ist, sodass es in der virtuellen Umgebung verschoben und die umschließende Form (F) positioniert werden kann.

11. System zur numerischen Modellierung eines Industriegebiets (1), wobei das Industriegebiet (1) eine Vielzahl von Anlagen (E1-E7) umfasst, die in einem Industriegebäude (B) angeordnet sind, wobei das System zur Modellierung **gekennzeichnet ist durch**
- ein System der dreidimensionalen Digitalisierung des Industriegebiets (1), sodass eine Bahn (NAP) erhalten wird, die eine Vielzahl von Punkten umfasst, die Maschen definieren, welche die äußere Hülle des Industriegebiets (1) mit der Gesamtheit der Anlagen (E1-E7) abbildet,
- ein System der Segmentierung (2) der Bahn (NAP) in Echtzeit in einer virtuellen Umgebung **durch** einen Benutzer, wobei das System der Segmentierung konfiguriert ist zum:
- Ermöglichen des Positionierens einer umschließenden Form (F) in einer virtuellen Umgebung dem Benutzer, um mindestens eine zu segmentierende Anlage (E1-E7) zu umschließen
- Verbinden der Punkte der Bahn (NAP), die zum Volumen der umschließenden Form (F) gehören, sodass ein virtuelles Objekt (OBJ) gebildet wird, das einer einzelnen Anlage (E1-E7), einer Vielzahl von Anlagen (E1-E7), die gemeinsam oder einzeln mit einem Teil einer Anlage (E1-E7) verbunden sind, entspricht.

## Claims

1. A method of digitally modeling an industrial space (1), the industrial space (1) comprising a plurality of equipment items (E1-E7) arranged in an industrial building (B), the modeling method is **characterized by:**
- a step of three-dimensional digitization of the industrial space (1) so as to obtain a web (NAP) comprising a plurality of points defining meshes representing the outer envelope of the industrial space (1) with all of its equipment items (E1-E7),
- a step of real-time segmentation of the web (NAP) in a virtual environment by a user during which:
- an encompassing shape (F) is positioned by the user in the virtual environment to encompass at least one equipment item to be segmented (E1-E7)
- the points of the web (NAP), belonging to the volume of the encompassing shape (F), are associated so as to form a virtual object (OBJ) corresponding to a single equipment item (E1-E7), to a plurality of equipment items (E1-E7) associated together, or only to a part of an equipment item (E1-E7).

2. The method according to claim 1, wherein the method comprises a step of extracting points belonging to the virtual object (OBJ) of the web (NAP) in a database (DB).

3. The method according to claim 2, wherein the method comprises a step of selecting a plurality of virtual objects (OBJ) from the database (DB) in a virtual environment so as to model a new organization of the equipment items (E1-E7) of the industrial space (1).

4. The method according to one of claims 1 to 3, wherein the encompassing shape (F) is in a convex form defining a closed volume.

5. The method according to the preceding claim, wherein, the encompassing shape (F) being defined by a closed contour (C) and a base line (D), the user draws the closed contour (C) in the virtual environment.

6. The method according to one of claims 1 to 5, comprising a step of calculating scalar products between at least one point to be tested (P_{TEST}) of the web (NAP) and points of the encompassing shape (F) in order to determine whether the point to be tested (P_{TEST}) belongs to the encompassing shape (F).

7. The method according to one of claims 1 to 6, wherein the step of three-dimensional digitization of the industrial space (1) is carried out by photogrammetry or by lasergrammetry.

8. The method according to one of claims 2 to 7, wherein, the web (NAP) comprising at least one boundary mesh (M1) comprising at least one object point (P_{OBJ}) belonging to the virtual object (OBJ) and at least one non-object point (P_{NOBJ}) not belonging to the object (OBJ), the method comprises a step of dividing the boundary mesh (M1) into a plurality of sub-meshes (M11, M12, M13), at least one of which belongs exclusively to the virtual object (OBJ).

9. The method according to claim 8, wherein the sub-meshes (M11, M12, M13) are defined from points of intersection (I1, I2) of the boundary mesh (M1) with the encompassing shape (F).

10. The method according to one of claims 1 to 9, wherein the segmentation step is implemented by a user equipped at least with a virtual reality headset (20) in order to be able to view the web (NAP) of the industrial space (1) and at least one control member (21) so as to allow moving in the virtual environment and positioning of the encompassing shape (F).

11. A system for digitally modeling an industrial space (1), the industrial space (1) comprising a plurality of equipment items (E1-E7) arranged in an industrial building (B), the modeling system is **characterized by:**
- a system for three-dimensional digitization of the industrial space (1) so as to obtain a web (NAP) comprising a plurality of points defining meshes representing the outer envelope of the industrial space (1) with all of its equipment items (E1-E7),
- a system (2) for real-time segmentation of the web (NAP) in a virtual environment by a user, the segmentation system being configured to:
- allow the user to position an encompassing shape (F) in the virtual environment to encompass at least one equipment item to be segmented (E1-E7)
- associate the points of the web (NAP), belonging to the volume of the encompassing shape (F), so as to form a virtual object (OBJ) corresponding to a single equipment item (E1-E7), to a plurality of equipment items (E1-E7) associated together, or only to a part of an equipment item (E1-E7).
